# EUROPEAN PATENT SPECIFICATION

(11) **EP 3 579 683 B1**
(45) Date of publication and mention of the grant of the patent: **09.12.2020**
(21) Application number: 18700341.3
(22) Date of filing: 11.01.2018
(51) Int. Cl.: A01G 3/025

(54) **HANDHELD TOOL**
HANDHALTBARES WERKZEUG
OUTIL À MAIN

(30) Priority: 07.02.2017 DE 102017001111
(43) Date of publication of application: 18.12.2019
(73) Proprietor: Husqvarna AB, 561 82 Huskvarna (SE)
(72) Inventor: KOHL, Peter, 89257 Illertissen (DE)
(74) Representative: Finkele, Rolf
(86) International application number: PCT/EP2018/050666
(87) International publication number: WO 2018/145850

(56) References cited:
- EP-A1- 0 895 712
- US-A- 3 039 189

## Description

### TECHNICAL FIELD

The present invention relates to handheld tools, and more specifically to a pruning tool.

### BACKGROUND

Tools, such as pruning tools, are well known in the art and generally used for performing various gardening operations, such as trimming, pruning, cutting etc. A typical pruning tool for performing cutting or pruning operation may include an outer tube, an inner tube telescopically disposed in the outer tube, and a pruning mechanism operably connected to the inner tube. In order to operate such pruning tool, a force may be applied to pull a handle coupled to the inner tube to provide sliding movement of the inner tube within the outer tube. This result in actuation of the pruning mechanism operably connected to the inner tube to perform the pruning operation. Typically, the inner tube remains in a surface contact with the outer tube, during relative movement i.e. sliding movement, of the inner tube. Such relative movement between the inner tube and the outer tube may result in friction, which may lead to wear and/or tear of the inner tube and the outer tube. Further, in order to avoid any mismatch during telescopically disposing the inner tube in the outer tube, the inner tube and the outer tube need to be designed with precision.

The US Patent 5,960,546 (hereinafter referred as the Patent '546) discloses a pruning device. The pruning device is used for cutting limbs. The pruning device includes a hollow tubular pole having an actuating assembly mounted on a first end of the pole, and a cutting assembly for engaging and cutting a limb mounted on a second end of the pole. A cable extends axially through the pole. The cable is connected at one end to the actuating assembly, and at the other end to the cutting assembly. The actuating assembly applies pulling force to the cable upon its operation. The cable triggers operation of the cutting assembly when the cable is subjected to pulling force. The cutting head includes a hook adapted to receive the limb, and a cutting blade pivotally mounted to the hook for cutting the limb. The blade pivotally moves toward the hook upon operation of the actuating assembly. The cutting head also includes a pulley assembly through which the cable is run upon exiting the pole.

Another example is provided by EP0895712 which discloses a lopper. The lopper is provided with a spring-biased blade cooperating with a jaw, a drive mechanism, and an elongate housing. The drive mechanism includes first and second wheels rotatable relative thereto about a first axis. A head line couples the first wheel to the blade at a connecting point, and the second wheel is coupled to a driving line. The first wheel is eccentric relative to the second wheel so that a distance separating a region of a guiding surface of the first wheel from the first axis is smallest at a predetermined point of blade travel across the bight. The lopper also includes an intermediate handle and a lower handle selectively operable to actuate the blade relative to the jaw.

Therefore, in light of the foregoing, there is a need for an improved tool.

### SUMMARY

In view of the above, it is an objective of the present invention to solve or at least reduce the problems discussed above. The objective is achieved by a handheld tool according to claim 1. The handheld tool includes a pole member having a first end and a second end distal to the first end. The handheld tool also includes an implement member operably disposed at the first end of the pole member. The handheld tool further includes a handle member having a holding portion and an elongated tube portion extending from the holding portion. Furthermore, the handheld tool includes a cable member extending through the pole member to connect the implement member with the handle member. The second end of the pole member includes a cover portion having an opening of a diameter corresponding to an outer diameter of the elongated tube portion. The outer diameter of the elongated tube portion is less than an inner diameter of the pole member. The elongated tube portion is provided with a sliding member slidably associated with the pole member for allowing telescopic movement of the elongated tube portion with respect to the pole member. Since the outer diameter of the elongated tube portion is less than the inner diameter of the pole member, any likelihood of wear and/or tear of the elongated tube portion and the pole member is substantially eliminated. In addition, any possibility of dimensional mismatch during telescopically disposing the elongated tube portion with respect to the pole member is substantially eliminated.

According to an aspect of the present invention, the elongated tube portion includes a first end portion connected to the holding portion and a second end portion provided with the sliding member.

According to another aspect of the present invention, the cable member includes a first engaging portion connected to the implement member and a second engaging portion connected to at least one of the sliding member and the holding portion.

According to yet another aspect of the present invention, the telescopic movement of the elongated tube portion actuates the cable member to operate the implement member.

According to yet another aspect of the present invention, an outer diameter of the sliding member corresponds to the inner diameter of the pole member allowing the telescopic movement of the elongated tube portion with respect to the pole member.

According to an aspect of the present invention, a movement of the sliding member with respect to the pole member is restricted at a predefined distance from the opening of the cover portion. Since the movement of the sliding member is restricted at the predefined distance, the handle member remains in stable position when operated to an operating condition. More specifically, movement of the handle member is halted when the movement of the sliding member is restricted, thereby avoiding unexpected dismantling of the handle member from the handheld tool.

According to another aspect of the present invention, the diameter of the opening is less than the outer diameter of the sliding member.

According to another aspect of the present invention, the elongated tube portion is composed of a material selected based on a material of the cover portion to substantially reduce friction between the elongated tube portion and the cover portion. Since friction is substantially reduced between the cover portion and the elongated tube portion, any likelihood of wear and/or tear of the cover portion and the elongated tube portion is substantially eliminated. Moreover, a manufacturing cost of the handheld tool is significantly reduced in addition to maintenance of the handheld tool.

According to yet another aspect of the present invention, the holding portion has a substantially D-shaped profile.

According to yet another aspect of the present invention, the handheld tool further includes a handle bar extending laterally from the pole member.

According to yet another aspect of the present invention, the handheld tool further includes an actuating mechanism disposed at the first end of the pole member and interfaced between the implement member and the cable member.

According to yet another aspect of the present invention, the cable member is composed of a material which is axially non-elastic.

According to yet another aspect of the present invention, the handheld tool is a pruning lopper.

### BRIEF DESCRIPTION OF THE DRAWINGS

The invention will be described in more detail with reference to the enclosed drawings, wherein:
FIG. **1** shows a perspective view of a handheld tool, according to one embodiment of the present invention;
FIG. **2** shows an exploded view of the handheld tool, according to one embodiment of the present invention;
FIG. **3** shows a partial sectional view of the handheld tool, according to one embodiment of the present invention;
FIG. **4** shows a partial sectional view of the handheld tool, when the handle member is in a non-operating condition, according to one embodiment of the present invention;
FIG **5** show a partial sectional view of the handheld tool, when the handle member is in an operating condition, according to one embodiment of the present invention; and
FIG. **6** shows a partial sectional view of a handheld tool, according to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

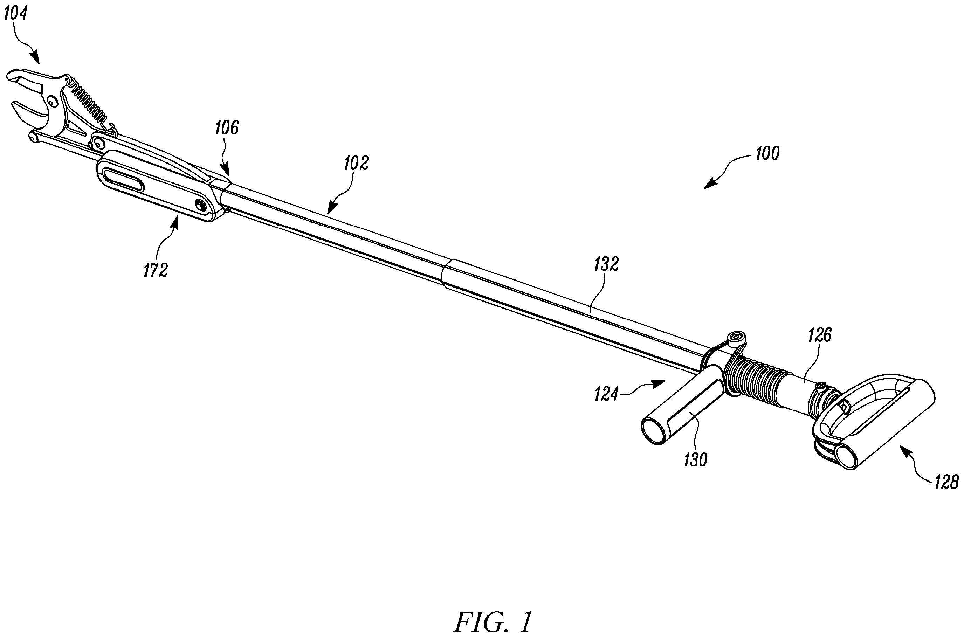

FIG. **1** illustrates a perspective view of a handheld tool **100,** according to an embodiment of the present invention. In the illustrated embodiment, the handheld tool **100** is embodied as a pruning lopper. In other embodiments, the handheld tool **100** may be any other type of manually operated tool known in the art, for example, a lopper, secateurs, a piler, a gripper or manipulators etc. The handheld tool **100** may be employed for cutting and/or trimming branches or twigs of tress, shrubs or the like. However, it should be understood that the handheld tool **100** may be employed in applications other than trimming branches of tress, without limiting the scope of the present invention. In the present disclosure, the term "handheld tool" **100** may be interchangeably referred to as "tool" **100.**

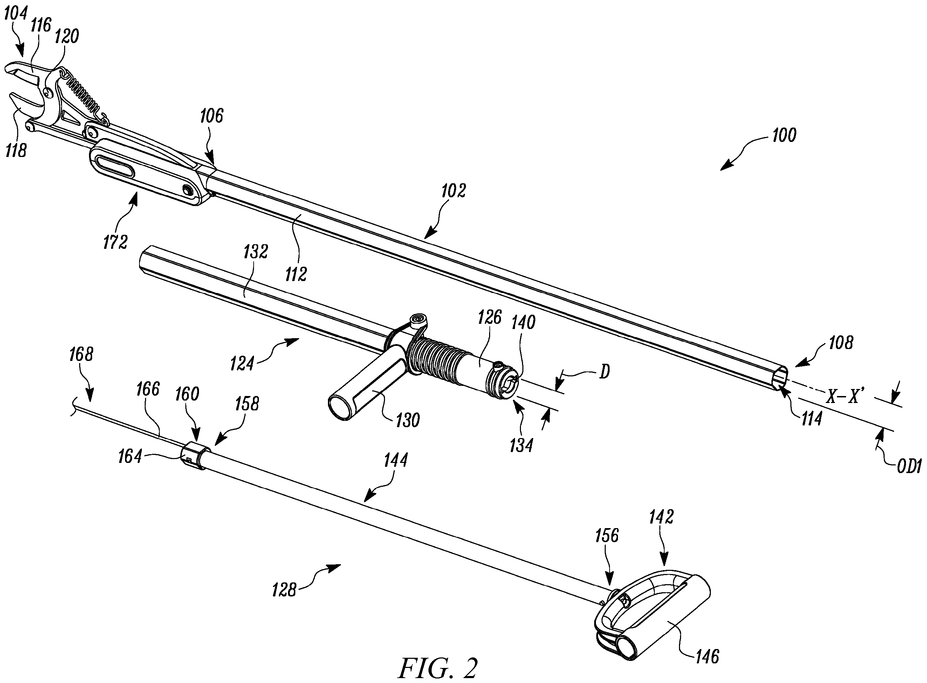

FIG. **2** illustrates an exploded view of the tool **100,** according to an embodiment of the present invention. Referring to FIG. **1** and FIG. **2****,** the tool **100** includes a pole member **102** and an implement member **104** associated with the pole member **102.** In the illustrated embodiment, the pole member **102** may have a substantially circular shaped cross-section. In various other embodiments, the pole member **102** may have an elliptical shaped cross-section, a square shaped cross-section, a polygonal shaped cross-section, a triangular shaped cross-section, a rectangular shaped cross-section or any other shape of cross-section known in the art, without limiting the scope of the present invention.

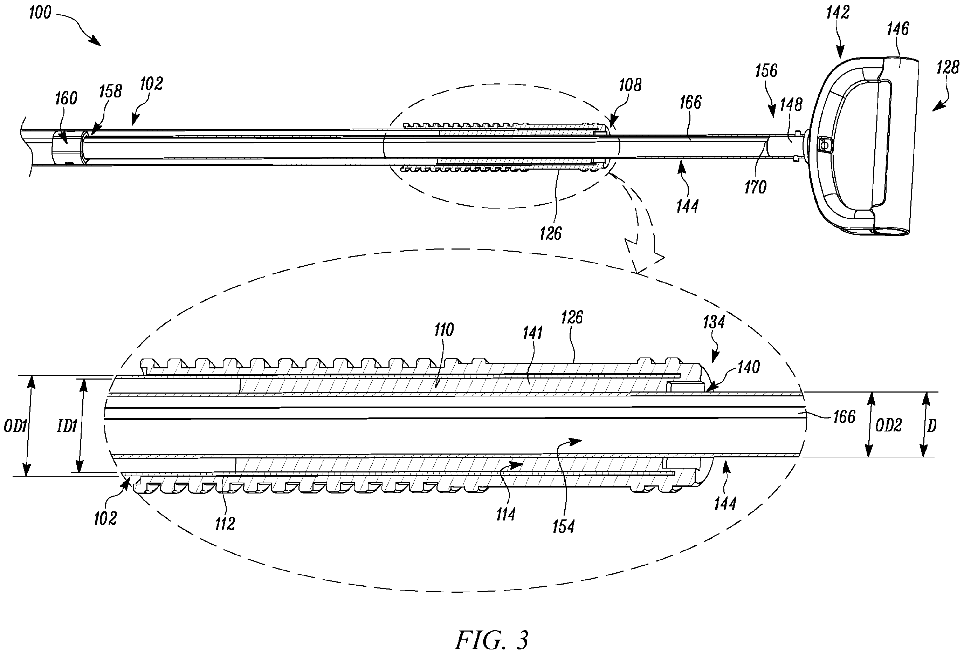

The pole member **102** includes a first end **106** and a second end **108** distal to the first end **106.** Further, the pole member **102** may include a first inner cylindrical surface **110** (shown in FIG. **3****)** and a first outer cylindrical surface **112** (shown in FIG. **3****)** distal from the first inner cylindrical surface **110.** The first inner cylindrical surface **110** has an inner diameter **ID1** (shown in FIG. **3****)** of the pole member **102,** interchangeably referred to as a first inner diameter **ID1.** The first inner cylindrical surface **110** may define a first recess **114** extending from the first end **106** of the pole member **102** to the second end **108** of the pole member **102,** along a longitudinal axis **X-X'** of the pole member **102.** The first outer cylindrical surface **112** has an outer diameter **OD1** (shown in FIG. **3****)** of the pole member **102,** interchangeably referred to as a first outer diameter **OD1.**

The implement member **104** of the tool **100** is operably disposed at the first end **106** of the pole member **102.** The implement member **104** is provided to perform various operations, such as cutting operation or trimming operation. The implement member **104** may include at least one movable member **116** and at least one stationary member **118.** The movable member **116** is pivotally connected to the stationary member **118.** The movable member **116** may perform a pivotal movement with respect to the stationary member **118** about a pivot **120,** during various operations of the tool **100.** The movable member **116** and the stationary member **118** may include cutting edges for performing various operations. The stationary member **118** may be designed to provide guidance to parts like branches to move towards the cutting edges. Further, various details of the implement member **104,** as illustrated in the FIG. **1****,** are purely exemplary in nature, and the implement member **104** may include any other design without limiting the scope of the present invention.

Further, the tool **100** also includes a gripping handle **124,** a cover portion **126,** and a handle member **128.** In the illustrated embodiment, the gripping handle **124** includes a handle bar **130** and a gripping sleeve **132.** The handle bar **130** may extend laterally from the pole member **102.** The gripping sleeve **132** of the gripping handle **124** may be fixedly connected to the pole member **102.**

FIG. **3** shows a partial sectional view of the handheld tool **100,** according to one embodiment of the present invention. Referring to FIGS. **2** and **3****,** the cover portion **126** of the tool **100** is disposed at the second end **108** of the pole member **102.** In the illustrated embodiment, the cover portion **126** may have a substantially cylindrical shaped cross-section corresponding to the cross-section of the pole member **102.** In various other embodiments, the cover portion **126** may have an elliptical shaped cross-section, a square shaped cross-section, a polygonal shaped cross-section, a triangular shaped cross-section, a rectangular shaped cross-section or any other shape of cross-section, without limiting the scope of the present invention.

The cover portion **126** of the tool **100** may be fixedly connected to the pole member **102,** thereby minimizing or eliminating any relative movement between the pole member **102** and the cover portion **126.** The cover portion **126** includes a receiving end **134.** According to the invention, the cover portion **126** includes an opening **140.** More specifically, the receiving end **134** of the cover portion **126** includes the opening **140** having a diameter **D.** The diameter **D** of the opening **140** corresponds to an outer diameter **OD2** of an elongated tube portion **144,** which will be described later in the present invention. Further, the cover portion **126** includes a stopping member **141** extending axially from the receiving end **134.**

The handle member **128** of the tool **100** is disposed at the second end **108** of the pole member **102.** The handle member **128** includes a holding portion **142** and the elongated tube portion **144** extending from the holding portion **142.** In the illustrated embodiment, the holding portion **142** has a substantially D-shaped profile. In various other embodiments, the holding portion **142** may have a T-shaped profile or the like. The holding portion **142** may include a gripping member **146** and an engaging member **148.** The gripping member **146** may be provided to assist a user to operate the tool **100.** The engaging member **148** of the tool **100** may be attached to the gripping member **146.** The engaging member **148** may be associated with the implement member **104,** which will be described later in the present disclosure. The handle member **128** of the tool **100** may be operable between an operating condition and a non-operating condition. The operating condition herein refer to a condition of the handle member **128** in which the holding portion **142** of the handle member **128** is extended or pulled outwardly by applying a pulling force.

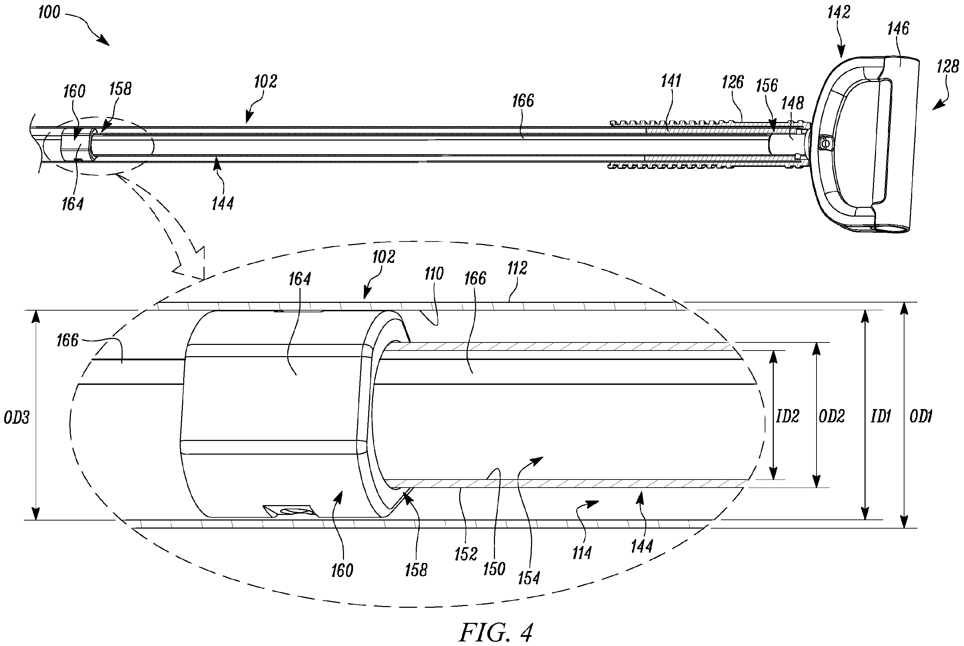

FIG. **4** shows a partial sectional view of the handheld tool **100,** when the handle member **128** is in the non-operating condition, according to an embodiment of the present invention. Referring to FIGS. **2****,** **3****,** and **4****,** the elongated tube portion **144** is connected to the holding portion **142** of the handle member **128.** The elongated tube portion **144** is adapted to be disposed within the pole member **102,** and telescopically movable with respect to the pole member **102** via the holding portion **142.** The elongated tube portion **144** is adapted to be recived within the pole member **102** through the receiving end **134** of the cover portion **126** connected to the second end **108** of the pole member **102.**

In the illustrated embodiment, the elongated tube portion **144** may have a substantially circular shaped cross-section. In various other embodiments, the elongated tube portion **144** may have a square shaped cross-section, a polygonal shaped cross-section, a triangular shaped cross-section, a rectangular shaped cross-section or any other shape of cross-section known in the art, without limiting the scope of the present invention.

The elongated tube portion **144** may have a second inner cylindrical surface **150** and a second outer cylindrical surface **152** distal to the second inner cylindrical surface **150.** The second inner cylindrical surface **150** has an inner diameter **ID2** of the elongated tube portion **144,** interchangeably referred to as a second inner diameter **ID2.** The second inner cylindrical surface **150** may define a second recess **154.** The second outer cylindrical surface **152** has an outer diameter **OD2** of the elongated tube portion **144,** interchangeably referred to as a second outer diameter **OD2.** The outer diameter i.e. the second outer diameter **OD2** of the elongated tube portion **144** is less than the inner diameter i.e. the first inner diameter **ID1** of the pole member **102.** Further, the second outer diameter **OD2** of the elongated tube portion **144** is substantially equal to the diameter **D** of the cover portion **126,** thereby allowing movement of the elongated tube portion **144** within the pole member **102** through the opening **140** of the cover portion **126.** The elongated tube portion **144** is composed of a material selected based on a material of the cover portion **126** to substantially reduce friction between the elongated tube portion **144** and the cover potion **126.** For example, aluminium may be selected as the material for composing the elongated tube portion **144** if the cover portion **126** is made of an elastomeric material. Since friction is substantially reduced between the cover portion **126** and the elongated tube portion **144,** any likelihood of wear and/or tear of the cover portion **126** and the elongated tube portion **144** is substantially eliminated.

Further, the elongated tube portion **144** includes a first end portion **156** and a second end portion **158** distal to the first end portion **156.** The first end portion **156** of the elongated tube portion **144** is connected to the holding portion **142** of the handle member **128.** More specifically, the first end portion **156** is connected to the engaging member **148** of the holding portion **142.** The second end portion **158** is provided with a sliding member **160** slidably associated with the pole member **102** for allowing the telescopic movement of the elongated tube portion **144** with respect to the pole member **102.**

The sliding member **160** moves along with the elongated tube portion **144** when the handle member **128** is operated to the operating condition. The movement of the sliding member **160** with respect to the pole member **102** is restricted at a predefined distance (not shown) from the opening **140** of the cover portion **126.** In the present embodiment, the stopping member **141** of the cover portion **126** restricts the movement of the sliding member **160** at the predefined distance from the opening **140** of the cover portion **126.** Since the movement of the sliding member **160** is restricted at the predefined distance, the handle member **128** remains in stable position when operated to an operating condition. More specifically, movement of the handle member **128** is halted when the movement of the sliding member **160** is restricted, thereby avoiding unexpected dismantling of the handle member **128** from the tool **100** while operating the handle member **128** to the operating condition. In the present embodiment, the elongated tube portion **144** and the sliding member **160** may be integral parts. In another embodiment, the elongated tube portion **144** and the sliding member **160** may be non-integral parts.

As shown in FIG. **4****,** the sliding member **160** has a substantially polygonal shaped cross-section. In various other embodiments, the sliding member **160** may have a circular shaped cross-section, a square shaped cross-section, an elliptical shaped cross-section, a triangular shaped cross-section, a rectangular shaped cross-section or any other shape of cross-section known in the art, without limiting the scope of the present invention.

The sliding member **160** includes an inner surface (not shown) and an outer surface **164** distal to the inner surface. The inner surface may have an inner diameter (not shown) of the sliding member **160,** interchangeably referred to as a third inner diameter. The third inner diameter may be substantially equal to the second outer diameter **OD2** of the elongated tube portion **144.** The inner surface may define a recess (not shown) for receiving the second end portion **158** of the elongated tube portion **144.**

The outer surface **164** of the sliding member **160** has an outer diameter **OD3,** interchangeably referred to as a third outer diameter **OD3.** The third outer diameter **OD3** of the sliding member **160** corresponds to the first inner diameter **ID1** of the pole member **102** allowing the telescopic movement of the elongated tube portion **144** with respect to the pole member **102.** More specifically, the third outer diameter **OD3** of the sliding member **160** may be substantially equal to the first inner diameter **ID1** of the pole member **102,** thereby allowing the telescopic movement of the elongated tube portion **144** with respect to the pole member **102.** Further, the diameter **D** of the opening **140** of the cover portion **126** is less than the third outer diameter **OD3** of the sliding member **160.**

Referring to FIGS.**2****,** **3****,** and **4****,** the tool **100** also includes a cable member **166** extending through the pole member **102** to connect the implement member **104** with the handle member **128.** The cable member **166** may be composed of a material which is radially elastic and axially non-elastic. The material may include, but is not limited to, leather, plastic, artificial fibers, and natural fibers. In an embodiment, a length of the cable member **166** may be selected in order to restrict the movement of the pole member **102** at the predefined distance from the opening **140** of the cover portion **126,** when the handle member **128** is operated to the operating condition. The cable member **166** includes a first engaging portion **168** and a second engaging portion **170.** The first engaging portion **168** is connected to the implement member **104** of the tool **100.** More specifically, the first engaging portion **168** is connected to the implement member **104** through an actuating mechanism **172** disposed at the first end **106** of the pole member **102.** The actuating mechanism **172** is interfaced between the implement member **104** and the cable member **166.**

Further, in the present embodiment, the second engaging portion **170** of the cable member **166** is connected to the holding portion **142.** More specifically, the second engaging portion **170** of the cable member **166** is connected to the engaging member **148** of the holding portion **142.** The cable member **166** is actuated by the telescopic movement of the elongated tube portion **144** to operate the implement member **104.** The cable member **166** is provided to transfer the telescopic movement of the elongated tube portion **144** to the implement member **104** through the actuating mechanism **172** for performing various operations. More specifically, the cable member **166** is adapted to operate the actuating mechanism **172** which in turn actuates the implement member **104,** when the elongated tube portion **144** telescopically moves with respect to the pole member **102.**

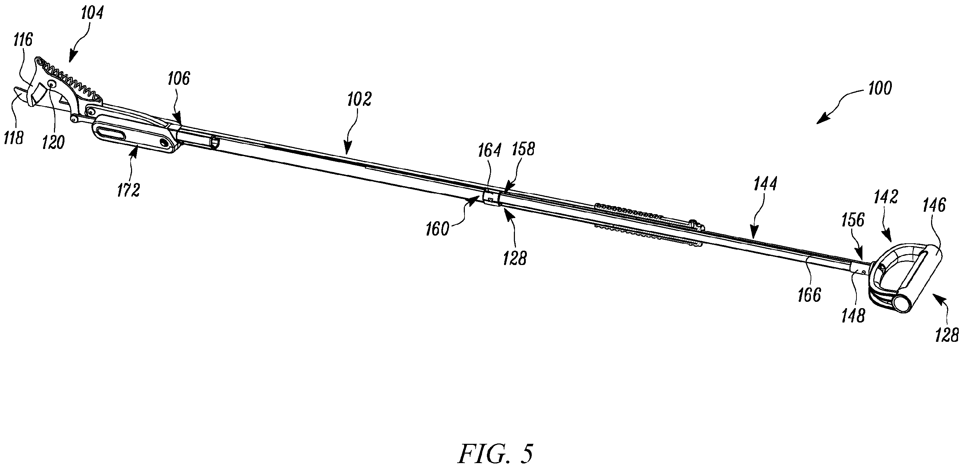

FIG. **5** illustrates a partial sectional view of the handheld tool **100,** when the handle member **128** is in the operating condition, according to an embodiment of the present invention. Referring to FIGS. **3** and **5****,** in order to operate the tool **100,** the handle member **128** is operated to the operating condition by applying a pulling force. When the holding portion **142** is subjected to the pulling force, the elongated tube portion **144** telescopically moves with respect to the pole member **102.**

During such telescopic movement of the elongated tube portion **144,** the sliding member **160** of the elongated tube portion **144** remains in contact with the first inner cylindrical surface **110** of the pole member **102.** When the sliding member **160** of the elongated tube portion **144** abuts the stopping member **141** of the cover portion **126,** movement of the handle member **128** is restricted while applying the pulling force on the handle member **128.** More specifically, the telescopic movement of the elongated tube portion **144** is restricted while operating the handle member **128,** when the sliding member **160** of the elongated tube portion **144** abuts the stopping member **141** of the cover portion **126.**

Further, when the handle member **128** is operated to the operating condition, the second engaging portion **170** of the cable member **166** moves along with the handle member **128,** thereby moving the first engaging portion **168** of the cable member **166.** Subsequently, movement of the first engaging portion **168** of the cable member **166** triggers the actuating mechanism **172** which actuates the implement member **104.** More specifically, the actuating mechanism **172** is triggered due to the movement of the first engaging portion **168** to rotate the movable member **116** of the implement member **104** about the pivot **120** to perform cutting operation or trimming operation.

As explained earlier, the second outer diameter **OD2** of the elongated tube portion **144** is less than the first inner diameter **ID1** of the pole member **102.** Therefore, during the telescopic movement of the elongated tube portion **144** possibility of wear and/or tear of the elongated tube portion **144** and the pole member **102** is substantially eliminated. In addition, any possibility of dimensional mismatch during telescopically disposing the elongated tube portion **144** with respect to the pole member **102** is substantially eliminated. Moreover, a manufacturing cost of the tool **100** may be significantly reduced in addition to maintenance of different components, such as the elongated tube portion **144** and the pole member **102,** of the tool **100.**

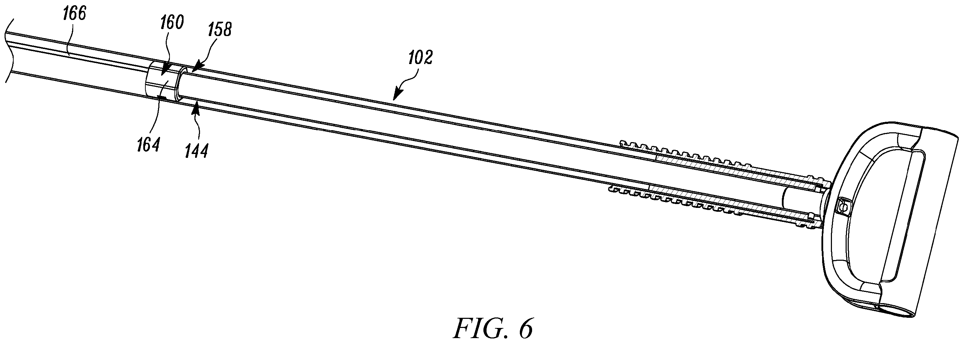

FIG. **6** shows a partial sectional view of a handheld tool **200,** according to another embodiment of the present invention. Similar to the tool **100** in the FIG. **1****,** the handheld tool **200** in FIG. **6** includes the pole member **102,** the implement member **104** operably disposed at the first end **106** of the pole member **102,** and the actuating mechanism **172** for actuating the implement member **104.** Further, similar to the tool **100** of the FIG. **1****,** the handheld tool **200** also includes the handle member **128** and the cable member **166.** The handle member **128** is connected to the cable member **166.** Similar to the handheld tool **100** of FIG. **1****,** the cable member **166** includes the first engaging portion **168** and the second engaging portion **170.** The first engaging portion **168** is connected to the implement member **104.** However, in the present embodiment, the second engaging portion **170** of the cable member **166** is connected to the sliding member **160** of the handle member **128.** It should be noted that other constructional details and operational features of all other components of the handheld tool **200** of FIG. **6** is similar to the constructional details and operational features of the tool **100** of FIG. **1****.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Handheld tool / Tool
- 102: Pole member
- 104: Implement member
- 106: First end
- 108: Second end
- 110: First inner cylindrical surface
- 112: First outer cylindrical surface
- 114: First recess
- 116: Movable member
- 118: Stationary member
- 120: Pivot
- 124: Gripping handle
- 126: Cover portion
- 128: Handle member
- 130: Handle bar
- 132: Gripping sleeve
- 134: Receiving end
- 140: Opening
- 141: Stopping member
- 142: Holding portion
- 144: Elongated tube portion
- 146: Gripping member
- 148: Engaging member
- 150: Second inner cylindrical surface
- 152: Second outer cylindrical surface
- 154: Second recess
- 156: First end portion
- 158: Second end portion
- 160: Sliding member
- 164: Outer surface
- 166: Cable member
- 168: First engaging portion
- 170: Second engaging portion
- 172: Actuating mechanism
- 200: Tool
- ID1: First inner diameter
- OD1: First outer diameter
- ID2: Second inner diameter
- OD2: Second outer diameter
- OD3: Third outer diameter
- D: Diameter
- X-X': Longitudinal axis

## Claims

1. A handheld tool **(100)** comprising:
a pole member **(102)** having a first end **(106)** and a second end **(108)** distal to the first end **(106),** wherein the second end **(108)** of the pole member **(102)** includes a cover portion **(126)** having an opening **(140);**
an implement member **(104)** operably disposed at the first end **(106)** of the pole member **(102);**
a handle member **(128)** having a holding portion **(142)** and an elongated tube portion **(144)** extending from the holding portion **(142),** wherein an outer diameter **(OD2)** of the elongated tube portion **(144)** corresponds to a diameter **(D)** of the opening **(140)** and is less than an inner diameter **(ID1)** of the pole member **(102),** and a cable member **(166)** extending through the pole member **(102)** to connect the implement member **(104)** with the handle member **(128),**
**characterized in that,**
the elongated tube portion **(144)** being provided with a sliding member **(160)** slidably associated with the pole member **(102)** for allowing telescopic movement of the elongated tube portion **(144)** with respect to the pole member **(102),**
wherein during the telescopic movement of the elongated tube portion (144), the sliding member (160) of the elongated tube portion (144) remains in contact with a first inner cylindrical surface (110) of the pole member (102).

2. The handheld tool **(100)** of claim 1, wherein the elongated tube portion **(144)** includes a first end portion **(156)** connected to the holding portion **(142)** and a second end portion **(158)** provided with the sliding member **(160).**

3. The handheld tool **(100)** of claim 1, wherein the cable member **(166)** includes a first engaging portion **(168)** connected to the implement member **(104)** and a second engaging portion **(170)** connected to at least one of the sliding member **(160)** and the holding portion **(142).**

4. The handheld tool **(100)** of claims 1 or 2, wherein the telescopic movement of the elongated tube portion **(144)** actuates the cable member **(166)** to operate the implement member **(104).**

5. The handheld tool **(100)** of any one of the preceding claims, wherein an outer diameter Z **(OD3)** of the sliding member **(160)** corresponds to the inner diameter **(ID1)** of the pole member **(102)** allowing the telescopic movement of the elongated tube portion **(144)** with respect to the pole member **(102).**

6. The handheld tool **(100)** of any one of the preceding claims, wherein a movement of the sliding member **(160)** with respect to the pole member **(102)** is restricted at a predefined distance from the opening **(140)** of the cover portion **(126).**

7. The handheld tool **(100)** of any of the preceding claim, the diameter of the opening **(140)** is less than the outer diameter of the sliding member **(160).**

8. The handheld tool **(100)** of any one of the preceding claims, wherein the elongated tube portion **(144)** is composed of a material selected based on a material of the cover portion **(126)** to substantially reduce friction between the elongated tube portion **(144)** and the cover portion **(126).**

9. The handheld tool **(100)** of any one of the preceding claims, wherein the holding portion **(142)** has a substantially D-shaped profile.

10. The handheld tool **(100)** of any one of the preceding claims further includes a handle bar **(130)** extending laterally from the pole member **(102).**

11. The handheld tool **(100)** of any one of the preceding claims further includes an actuating mechanism **(172)** disposed at the first end **(106)** of the pole member **(102)** and interfaced between the implement member **(104)** and the cable member **(166).**

12. The handheld tool **(100)** of any one of the preceding claims, wherein the cable member **(166)** is composed of a material which is axially non-elastic.

13. The handheld tool **(100)** of any one of the preceding claims, wherein the handheld tool **(100)** is a pruning lopper.

## Patentansprüche

1. Handwerkzeug (100) umfassend:
ein Stangenelement (102) mit einem ersten Ende (106) und einem zweiten Ende (108) distal zu dem ersten Ende (106), wobei das zweite Ende (108) des Stangenelements (102) einen Abdeckabschnitt (126) mit einer Öffnung (140) umfasst;
ein Geräteelement (104), das funktionsfähig am ersten Ende (106) des Stangenelements (102) angeordnet ist;
ein Griffelement (128) mit einem Halteabschnitt (142) und einem länglichen Rohrabschnitt (144), der sich von dem Halteabschnitt (142) aus erstreckt, wobei ein Außendurchmesser (OD2) des länglichen Rohrabschnitts (144) einem Durchmesser (D) der Öffnung (140) entspricht und kleiner als ein Innendurchmesser (ID1) des Stangenelements (102) ist, und
ein Kabelelement (166), das sich durch das Stangenelement (102) erstreckt, um das Geräteelement (104) mit dem Griffelement (128) zu verbinden,
**dadurch gekennzeichnet, dass**
der längliche Rohrabschnitt (144) mit einem Gleitelement (160) versehen ist, das verschiebbar mit dem Stangenelement (102) verbunden ist, um eine teleskopische Bewegung des länglichen Rohrabschnitts (144) in Bezug auf das Stangenelement (102) zu ermöglichen,
wobei während der teleskopischen Bewegung des länglichen Rohrabschnitts (144) das Gleitelement (160) des länglichen Rohrabschnitts (144) in Kontakt mit einer ersten inneren zylindrischen Oberfläche (110) des Stangenelements (102) bleibt.

2. Handwerkzeug (100) nach Anspruch 1, wobei der längliche Rohrabschnitt (144) einen ersten Endabschnitt (156), der mit dem Halteabschnitt (142) verbunden ist, und einen zweiten Endabschnitt (158), der mit dem Gleitelement (160) versehen ist, umfasst.

3. Handwerkzeug (100) nach Anspruch 1, wobei das Kabelelement (166) einen ersten Eingriffsabschnitt (168), der mit dem Geräteelement (104) verbunden ist, und einen zweiten Eingriffsabschnitt (170) umfasst, der mit mindestens einem von dem Gleitelement (160) und dem Halteabschnitt (142) verbunden ist.

4. Handwerkzeug (100) nach Anspruch 1 oder 2, wobei die Teleskopbewegung des länglichen Rohrabschnitts (144) das Seilelement (166) betätigt, um das Geräteelement (104) zu betätigen.

5. Handwerkzeug (100) nach einem der vorhergehenden Ansprüche, wobei ein Außendurchmesser (OD3) des Gleitelements (160) dem Innendurchmesser (ID1) des Stangenelements (102) entspricht, wodurch die teleskopische Bewegung des länglichen Rohrabschnitts (144) in Bezug auf das Stangenelement (102) ermöglicht ist.

6. Handwerkzeug (100) nach einem der vorhergehenden Ansprüche, wobei eine Bewegung des Gleitelements (160) in Bezug auf das Stangenelement (102) in einem vordefinierten Abstand von der Öffnung (140) des Abdeckabschnitts (126) eingeschränkt ist.

7. Handwerkzeug (100) nach einem der vorhergehenden Ansprüche, wobei der Durchmesser der Öffnung (140) kleiner ist als der Außendurchmesser des Gleitelements (160).

8. Handwerkzeug (100) nach einem der vorhergehenden Ansprüche, wobei der langgestreckte Rohrabschnitt (144) aus einem Material besteht, das auf der Grundlage eines Materials des Abdeckabschnitts (126) ausgewählt wurde, um die Reibung zwischen dem langgestreckten Rohrabschnitt (144) und dem Abdeckabschnitt (126) wesentlich zu verringern.

9. Handwerkzeug (100) nach einem der vorhergehenden Ansprüche, wobei der Halteabschnitt (142) ein im Wesentlichen D-förmiges Profil hat.

10. Handwerkzeug (100) nach einem der vorhergehenden Ansprüche, ferner umfassend eine Griffstange (130), die sich seitlich vom Stangenelement (102) erstreckt.

11. Handwerkzeug (100) nach einem der vorhergehenden Ansprüche, ferner umfassend einen Betätigungsmechanismus (172), der am ersten Ende (106) des Stangenelements (102) angeordnet ist und eine Schnittstelle zwischen dem Geräteelement (104) und dem Seilelement (166) bildet.

12. Handwerkzeug (100) nach einem der vorhergehenden Ansprüche, wobei das Kabelelement (166) aus einem Material besteht, das axial unelastisch ist.

13. Handwerkzeug (100) nach einem der vorhergehenden Ansprüche, wobei das Handwerkzeug (100) eine Gartenschere ist.

## Revendications

1. Outil à main (100) comprenant :
un élément de perche (102) ayant une première extrémité (106) et une seconde extrémité (108) distale par rapport à la première extrémité (106), où la seconde extrémité (108) de l'élément de perche (102) comprend une partie couvrante (126) ayant une ouverture (140) ;
un élément d'outil (104) disposé de manière fonctionnelle au niveau de la première extrémité (106) de l'élément de perche (102) ;
un élément de poignée (128) ayant une partie de maintien (142) et une partie de tube allongée (144) qui s'étend de la partie de maintien (142), où un diamètre extérieur (OD2) de la partie de tube allongée (144) correspond à un diamètre (D) de l'ouverture (140) et
est inférieur à un diamètre intérieur (ID1) de l'élément de perche (102), et
un élément de câble (166) qui s'étend à travers l'élément de perche (102) pour relier l'élément d'outil (104) à l'élément de poignée (128),
**caractérisé en ce que**,
la partie de tube allongée (144) étant pourvue d'un élément coulissant (160) associé de manière coulissante à l'élément de perche (102) pour permettre un mouvement télescopique de la partie de tube allongée (144) par rapport à l'élément de perche (102),
où pendant le mouvement télescopique de la partie de tube allongée (144), l'élément coulissant (160) de la partie de tube allongée (144) reste en contact avec une première surface cylindrique intérieure (110) de l'élément de perche (102).

2. Outil à main (100) selon la revendication 1, où la portion de tube allongée (144) comprend une première partie d'extrémité (156) reliée à la partie de maintien (142) et une seconde partie d'extrémité (158) pourvue de l'élément coulissant (160).

3. Outil à main (100) selon la revendication 1, où l'élément de câble (166) comprend une première partie d'engagement (168) reliée à l'élément d'outil (104) et une seconde partie d'engagement (170) reliée à au moins un de l'élément coulissant (160) et de la partie de maintien (142).

4. Outil à main (100) selon les revendications 1 ou 2, où le mouvement télescopique de la partie de tube allongée (144) actionne l'élément de câble (166) pour faire fonctionner l'élément d'outil (104).

5. Outil à main (100) selon l'une quelconque des revendications précédentes, où un diamètre extérieur (OD3) de l'élément coulissant (160) correspond au diamètre intérieur (101) de l'élément de perche (102) permettant le mouvement télescopique de la partie de tube allongée (144) par rapport à l'élément de perche (102).

6. Outil à main (100) selon l'une quelconque des revendications précédentes, où un mouvement de l'élément coulissant (160) par rapport à l'élément de perche (102) est restreint à une distance prédéfinie de l'ouverture (140) de la partie couvrante (126).

7. Outil à main (100) selon l'une quelconque des revendications précédentes, le diamètre de l'ouverture (140) est inférieur au diamètre extérieur de l'élément coulissant (160).

8. Outil à main (100) selon l'une quelconque des revendications précédentes, où la partie de tube allongée (144) est composée d'un matériau choisi sur la base d'un matériau de la partie couvrante (126) pour réduire sensiblement la friction entre la partie de tube allongée (144) et la partie couvrante (126).

9. Outil à main (100) selon l'une quelconque des revendications précédentes, où la partie de maintien (142) a un profil sensiblement en forme de D.

10. Outil à main (100) selon l'une quelconque des revendications précédentes comprenant en outre une barre de poignée (130) qui s'étend latéralement de l'élément de perche (102).

11. Outil à main (100) selon l'une quelconque des revendications précédentes comprenant en outre un mécanisme d'actionnement (172) disposé au niveau de la première extrémité (106) de l'élément de perche (102) et relié entre l'élément d'outil (104) et l'élément de câble (166).

12. Outil à main (100) selon l'une quelconque des revendications précédentes, où l'élément de câble (166) est composé d'un matériau qui est axialement non élastique.

13. Outil à main (100) selon l'une quelconque des revendications précédentes, où l'outil à main (100) est un coupe-branches.
